# EUROPÄISCHE PATENTSCHRIFT

(11) **EP 0 507 792 B1**
(45) Veröffentlichungstag und Bekanntmachung des Hinweises auf die Patenterteilung: **25.01.1995**
(21) Anmeldenummer: 91900794.8
(22) Anmeldetag: 17.12.1990
(51) Int. Cl.: C08G 18/36, C08G 18/69

(54) **VERWENDUNG VON POLYESTERPOLYOLEN ENTHALTENDEN REAKTIONSMISCHUNGEN BEI DER HERSTELLUNG VON MASSIVEN POLYURETHANWERKSTOFFEN NACH DEM GIESSVERFAHREN**
USE OF REACTION MIXTURES CONTAINING POLYESTER POLYOLS IN THE PRODUCTION OF SOLID POLYURETHANE MATERIALS BY CASTING
MISE EN UVRE DE MELANGES REACTIONNELS CONTENANT DES POLYESTERPOLYOLS LORS DE LA FABRICATION DE MATERIAUX POLYURETHANES PLEINS SELON LA METHODE DE COULEE

(30) Priorität: 27.12.1989 DE 3943080
(43) Veröffentlichungstag der Anmeldung: 14.10.1992
(73) Patentinhaber: Henkel Kommanditgesellschaft auf Aktien, 40191 Düsseldorf (DE)
(72) Erfinder: HÖFER, Rainer, D-4000 Düsseldorf 30 (DE); STOLL, Gerhard, D-4052 Korschenbroich 1 (DE); DAUTE, Peter, D-4300 Essen 1 (DE); GRÜTZMACHER, Roland, D-5603 Wülfrath (DE)
(86) Internationale Anmeldenummer: EP9002215
(87) Internationale Veröffentlichungsnummer: WO9109894

(56) Entgegenhaltungen:
- EP-A- 0 259 722
- DE-A- 1 925 349
- FR-A- 2 277 842
- US-A- 3 699 061
- US-A- 3 733 426

## Beschreibung

Die Erfindung liegt auf dem Gebiet der Polyurethanwerkstoffe und betrifft die Verwendung von Polyesterpolyole enthaltenden Reaktionsmischungen als Polyolkomponente bei der Herstellung von massiven Polyurethanwerkstoffen nach dem Gießverfahren.

Nach dem Gießverfahren hergestellte, massive Polyurethanwerkstoffe sind aus dem Stand der Technik in weitem Umfang bekannt. Sie bestehen in der Regel aus dem sogenannten "Reaktionsharz", einer mindestens zwei endständige Isocyanatgruppen enthaltenden Verbindung und einer Polyolkomponente ("Härter"). Durch Mischen der Polyolkomponente mit dem Isocyanatgruppen enthaltendem Reaktionsharz resultiert eine Reaktionsmasse, die ggf. nach Zusatz gewünschter Additive in eine Form gegossen wird, wo sie im Zuge der Polyadditionsreaktion zu Polyurethanpolymeren auszuhärten vermag. Eine Übersicht über Polyurethangießsysteme gibt beispielsweise E.W. Becker und D. Braun "Kunststoffhandbuch", Band 7 (Polyurethane, Verlag Hanser, 1983 oder B.A. Dombrow, "Polyurethanes", 2nd Edition, New York (1965).

Insbesondere besteht ein Bedarf an Polyolkomponenten, die sich aus nachwachsenden, erneuerbaren Rohstoffquellen ableiten lassen. Bereits sehr früh wurde das Naturprodukt Rizinusöl als OH-gruppenhaltige Komponente bei der Herstellung von Polyurethanwerkstoffen eingesetzt ("Plastics Laboratory" - Princetown University, "Castor Oil Polyurethanes and Applications as Potting Components", U.S.O.T. Seiten 99 bis 165). Von Vorteil erwies sich die geringe Viskosität des Rizinusöls, die eine leichte Verarbeitung bei der Herstellung der Polyurethanmassen ermöglichte. Heute genügen die unter Verwendung von Rizinusöl erhaltenen Polyurethanwerkstoffe nicht mehr den modernen Anforderungen hinsichtlich Zugfestigkeit, Härte, thermische Verformungsfestigkeit und elektrischen Eigenschaften.

Daher wird in der deutschen Offenlegungsschrift DE-OS 36 30 264 sowie in der europäischen Patentanmeldung 0 125 579 vorgeschlagen, anstelle von Rizinusöl Ringöffnungsprodukte von epoxidierten Triglyceridölen mit einwertigen niederen Alkoholen als Polyolkomponente einzusetzen. Jedoch zeigen Polyurethanwerkstoffe auf Basis von Polyetherpolyolen eine größere Tendenz zur Entflammbarkeit und eine ausgeprägte Neigung zur Hydrophilie. Insbesondere die Neigung zur Hydrophilie führt bei der Verarbeitung und/oder Lagerung jener Polyurethanwerkstoffen in Gegenwart von Luftfeuchtigkeit zu vermehrter Blasenbildung, die die Produktqualität herabsetzt.

Ein verbessertes Flammschutzverhalten und eine größere Hydrolysestabilität wird bei Polyurethanwerkstoffen auf Basis von Polyesterpolyolen beobachtet.

Aus den amerikanischen Patentschriften 2 882 249 sowie 4 025 477 sind Polyurethanmassen bekannt, deren Polyesterpolyolkomponente durch Ringöffnung von epoxidiertem Sojabohnenöl mit Rizinolsäure (US 2 882 249) oder mit Acrylsäure (US 4 025 477) hergestellt worden sind. In beiden Patentschriften erfolgt die Herstellung der Polyurethanmassen durch Umsetzung der Isocyanatkomponente mit den Polyesterpolyolen entweder unter Erwärmung oder in Anwesenheit eines organischen Lösungsmittels. Höhere Temperaturen sind jedoch bei der Herstellung von Polyurethanmassen unerwünscht, da Polyurethane die Eigenart der Reversion, d.h. zur Rückreaktion der Urethanbindungen in die Ausgangsstoffe aufweisen. Auch die Verwendung von organischen Lösungsmitteln ist aus ökologischer und ökonomischer Sicht bedenklich und daher möglichst zu vermeiden.

In der US 3 699 061 wird eine Beschichtungsmasse beschrieben, die urethanmodifizierte epoxidierte Ester und Polycarbonsäuren enthält. Es werden mehrfach epoxidierte Ester mit Carbonsäuren zu partiell ringgeöffneten epoxidierten Estern umgesetzt. Diese werden mit Isocyanaten kettenverlängert, so daß nunmehr urethanmodifizierte partiell ringgeöffnete epoxidierte Ester vorliegen. Diese weisen einen beachtlichen Teil an nicht umgesetzten Oxirangruppen auf und werden in Zweikomponenten-Reaktivsystemen als Harz eingesetzt. Als Härter werden in diesen Systemen mehrfunktionelle Carbonsäuren eingesetzt. Der Härtungsmechanismus dieser Systeme beruht also auf der Reaktion von Oxirangruppen mit Carbonsäuregruppen.

Bei der Herstellung von Polyurethanwerkstoffen tritt häufig das Problem der mangelnden Verträglichkeit (Kompatibilität) der Isocyanatkomponente mit der Polyolkomponente auf, wodurch es beim fertigen Polyurethanwerkstoff zu unerwünschten Entmischungen und Trübungserscheinungen kommen kann. Desweiteren erfordert die Herstellung von Polyurethanwerkstoffen möglichst niedrigviskose Ausgangsstoffe, um blasenfreies Arbeiten bzw. Verarbeiten zu ermöglichen.

Aufgabe der vorliegenden Erfindung ist es daher, Polyesterpolyole als Polyolkomponente bei der Herstellung von Polyurethanwerkstoffen nach dem Gießverfahren zu verwenden, die möglichst niedrigviskos und mit Isocyanaten kompatibel sind. Unter Verwendung jener Polyesterpolyole soll die Herstellung der Polyurethanwerkstoffe auch möglich sein, ohne bei erhöhten Temperaturen oder in Gegenwart eines organischen Lösungsmittels arbeiten zu müssen. Desweiteren sollen die unter Verwendung jener Polyesterpolyole erhaltenen Polyurethanmassen möglichst niedrigviskos und wenig entflammbar sein sowie gegenüber den von Rizinusöl erhaltenen Polyurethanmassen verbesserte Eigenschaften aufweisen.

Gegenstand der vorliegenden Erfindung ist somit die Verwendung von bei Raumtemperatur gießfähigen Polyesterpolyole enthaltenden Reaktionsmischungen, die durch ringöffnende Umsetzung von Estern aus epoxidierten Säuren und/oder Alkoholen mit Mono-Carbonsäuren bis zu einem Restepoxidsauerstoffgehalt im Reaktionsgemisch unter 1,0 Gew.-% hergestellt worden sind, als Polyolkomponente für die Herstellung von Polyurethanwerkstoffen nach dem Gießverfahren.

Unter den in Rede stehenden Polyesterpolyole enthaltenden Reaktionsmischungen werden Ringöffnungsprodukte von epoxidierten Estern mit Carbonsäuren verstanden, die im statistischen Mittel pro Molekül mehr als eine, bevorzugt mehr als 1,5 freie Hydroxylgruppen sowie Estergruppen aufweisen.

Im Rahmen der Erfindung können Ester von epoxidierten Säuren und/oder von epoxidierten Alkoholen eingesetzt werden. Die Herstellung eines Esters mit einem epoxidierten alkoholischen Bestandteil erfolgt üblicherweise durch Epoxidierung des ungesättigten Alkohols nach seiner Veresterung mit einer Carbonsäure. Die Herstellung eines Esters mit einer epoxidierten Säurekomponente erfolgt in üblicher Weise durch Epoxidierung einer ungesättigten Carbonsäure nach ihrer Veresterung mit einem Alkohol. Die Herstellung eines Esters mit sowohl epoxidierter Alkohol- als auch Säurekomponente erfolgt durch Kombination obiger Verfahren. Die Epoxidierung wird nach an sich bekannten Verfahren durchgeführt, wie zum Beispiel durch vollständige oder nahezu vollständige Epoxidierung nach dem Verfahren der deutschen Patentschrift DE-PS 10 42 565. Eine teilweise Epoxidierung ist ebenfalls dann möglich, wenn eine mehrfach ungesättigte Verbindung vorliegt, wobei gegeben sein muß, daß die dabei entstehenden epoxidierten Ester im statistischen Mittel pro Molekül mehr als eine Epoxidgruppe, bevorzügt 2 ünd mehr Epoxidgrüppen, enthalten.

Vorzugsweise werden Ester von epoxidierten Carbonsäuren mit ein- bis dreiwertigen Alkoholen mit bis zu 40 C-Atomen, bevorzugt mit bis zu 36 C-Atomen und insbesondere mit 1 bis 22 C-Atomen eingesetzt. Besonders bevorzugt werden als Ester Triglyceride mit epoxidierten Carbonsäuren und insbesondere mit epoxidierten Fettsäuren mit bis zu 40 C-Atomen, bevorzugt mit bis zu 36 C-Atomen und insbesondere mit bis zu 22 C-Atomen. Als Ausgangsstoffe für die bevorzugten, epoxidierten Triglyceride eignen sich die zahlreichen tierischen und/oder pflanzlichen Triglyceride mit einfach- und/oder mehrfach ungesättigten Fettsäureresten wie Palmöl, Schmalz, Erdnußöl, Rüböl, Baumwollsaatöl, Sojabohnenöl, Tranöl, Sonnenblumenöl, Korianderöl und/oder Leinöl. Einer besonderen Ausführungsform der vorliegenden Erfindung entsprechend werden als epoxidierte Ester epoxidiertes Sojabohnenöl (Epoxidsauerstoffgehalt 5,8 bis 6,5 Gew.-%), ölsäurereiches und/oder ölsäurearmes epoxidiertes Sonnenblumenöl (Epoxidsauerstoffgehalt 4,4 bis 6,6 Gew.-%), epoxidiertes Leinöl (Epoxidsauerstoffgehalt 8,2 bis 8,6 Gew.-%) sowie epoxidiertes Tranöl (Epoxidsauerstoffgehalt 6,3 bis 6,7 Gew.-%) eingesetzt.

Im Rahmen der Erfindung werden die epoxidierten Reaktionskomponenten vorzugsweise gemäß der älteren Patentanmeldung DE P 3935127.0 durch zeitverzögertes Zudosieren zu vorgelegten Mono-Carbonsäuren vollständig oder zumindest nahezu vollständig ringgeöffnet. Als Monocarbonsäuren können synthetische, natürliche, aliphatische, aromatische, araliphatische und/oder cyclische Carbonsäuren oder Mischungen derselben vorgelegt werden. Vorzugsweise werden Monocarbonsäuren oder Mischungen von gesättigten, ungesättigten, verzweigten und/oder unverzweigten Carbonsäuren mit bis zu 24 C-Atomen, bevorzugt mit 6 bis 18 C-Atomen vorgelegt. Besonders bevorzugt werden Capryl-, Caprin-, Behen-, Palmitolein-, Öl-, Linol- und/oder Linolensäure.

Die epoxidierten Reaktionskomponenten werden vorzugsweise in Mengen bis 1 : 10, bevorzugt in höchstens äquimolaren Mengen und insbesondere in geringem Unterschuß - berechnet als mol-% Epoxid und bezogen auf mol-% Säuregruppe - zu vorgelegten Carbonsäuren zeitverzögert eindosiert. Im Rahmen der Erfindung erfolgt das zeitverzögerte Eindosieren der epoxidierten Reaktionskomponente derart, daß substantielle Anteile an nicht abreagierten Epoxidgruppen im Reaktionsgemisch vermieden werden. Eine mengenmäßige Bestimmung der substantiellen Anteile nach dem erfindungsgemäßen Verfahren erfolgt im Vergleich zu den nicht abreagierten Epoxidgruppen nach dem sogenannten Eintopfverfahren. Bei dem Eintopfverfahren werden die epoxidierten Reaktionskomponenten auf einmal vollständig zu der vorgelegten Carbonsäure gegeben. Unter gleichen Umsetzungsbedingungen, d.h. gleiche Art und Mengen der epoxidierten Reaktionskomponenten und vorgelegten Carbonsäuren, ist der Gehalt nach Zugabe der gesamten Menge der epoxidierten Reaktionskomponente an nicht abreagierten Epoxidgruppen im Reaktionsgemisch nach dem erfindungsgemäßen Zutropfverfahren im Vergleich zu dem Eintopfverfahren um bis zu 50 % - berechnet als Epoxidsauerstoffgehalt in Gew.-% und bezogen auf gesamte Reaktionsmischung - niedriger. Deutlich niedrigere Gehalte kann man erhalten, wenn man die Dosiergeschwindigkeit sehr klein halt. Aus ökonomischen Gründen ist jedoch eine möglichst schnelle Dosierung erwünscht, die vorzugsweise 1,5 Stunden nicht überschreiten sollte. Der Gehalt an nicht abreagierten Epoxidgruppen läßt sich über Titration nach der Methode von R.R. Jay (Analytische Chemie 36 (1964, Seite 667 ff.) bestimmen.

Im Rahmen der Erfindung erfolgt die Eindosierung der epoxidierten Reaktionskomponenten zu vorgelegten Carbonsäuren, wobei die Carbonsäuren auf Temperaturen von über 80 °C und unter 300 °C, bevorzugt über 100 °C und unter 270 °C erwärmt worden sind. Die konkrete Reaktionstemperatur wird vor allem durch die vorgelegten Carbonsäuren bestimmt. So werden bei niederen Carbonsäuren Reaktionstemperaturen des unteren Temperaturbereichs, bei höheren Carbonsäuren die des höheren Temperaturbereichs bevorzugt, um die Carbonsäuren möglichst in ihren flüssigen Zuständen vorliegen zu haben. Die Reaktionsmischung läßt man bei den obengenannten Reaktionstemperaturen solange abreagieren, bis ein absoluter Restepoxidsauerstoffgehalt im Reaktionsgemisch unter 1,0 Gew.-%, vorzugsweise unter 0,5 Gew.-% und insbesondere unter 0,3 Gew.-% erreicht ist.

Erfindungsgemäß werden nach Abreaktion der Epoxidgruppen bis zum gewünschten Restepoxidgehalt die gegebenenfalls überschüssigen Carbonsäuren aus dem Reaktionsgemisch entfernt. Bevorzugt wird die destillative Abtrennung der überschüssigen Carbonsäuren unter Vakuum, aber auch andere Trennungsarten wie Neutralisation mit einer Base und gegebenenfalls anschließender Filtration sind möglich. Das Abdestillieren der Carbonsäuren erfordert je nach eingesetzter Carbonsäuren und angelegtem Vakuum unterschiedliche Temperaturen, die aber die bevorzugten Reaktionstemperaturen bis 300 °C nicht überschreiten sollten.

Im Rahmen der Erfindung werden insbesondere solche Polyesterpolyole enthaltende Reaktionsmischungen bevorzugt, die einen hohen Anteil an monomeren Polyesterpolyolen enthalten, wobei die Monomere im statistischen Mittel mehr als eine, bevorzugt mehr als 1,5 freie Hydroxylgruppen sowie in Nachbarstellung zur Hydroxylgruppe Estergruppen der vorgelegten Carbonsäure enthalten. Desweiteren enthalten die erfindungsgemäß verwendeten Polyesterpolyolmischungen dimere, trimere und/oder höhere Kondensate, die beispielsweise durch Epoxidringöffnung mit bereits vorliegenden Esterpolyolen entstanden sind. Nach der Gelpermeationschromatographie (GPC) (Standard (Poly-)styrol) kann man erkennen, daß die erfindungsgemäß verwendeten Polyesterpolyolmischungen einen Volumenanteil von bis zu 50 % vorzugsweise bis zu 45 und insbesondere um 40 % an Monomeren enthalten.

Bevorzugt werden Polyesterpolyole enthaltende Reaktionsmischungen verwendet, die Viskositäten nach Höppler (DIN 53015) bei 20 °C unter 9 000 mPa·s, vorzugsweise unter 6 000 mPa·s und bevorzugt Viskositäten in dem Bereich von 50 bis 5 000 mPa·s aufweisen. Diese Polyesterpolyole enthaltenden Reaktionsmischungen sind somit bei Raumtemperatur (20°C bis 25°C) gießfähig.

Im Rahmen der Erfindung werden als Polyesterpolyole enthaltende Reaktionsmischung insbesondere jene verwendet, die durch Ringöffnung von epoxidiertem Sojaölepoxid (Epoxidsauerstoffgehalt cirka 6,8 Gew.-%) mit Vorlauffettsäure - ein Fettsäuregemisch aus C₈-Säuren und C₁₀-Säuren, welches eine Säurezahl von 300 bis 400 aufweist - ringgeöffnet wurde. Die danach hergestellten Polyesterpolyole enthaltenden Reaktionsmischungen weisen Viskositäten in dem Bereich um 4000 mPa·s (nach Höppler, 20°C) auf.

Die Polyesterpolyole enthaltenden Reaktionsmischungen können entweder für sich allein oder in Abmischung mit Polybutadiendiolen als Polyolkomponente bei der Polyurethangießharzherstellung verwendet werden. Aus der deutschen Patentschrift DE-PS 28 47 383 sind Mischungen von Polyetherpolyesterpolyolen mit Polybutadiendiol als Polyolkomponente bei der Herstellung von Polyurethanmassen bekannt. Die dort eingesetzten Polyetherpolyesterpolyole besitzen jedoch ein relativ geringes Äquivalentgewicht von 350, damit unter Mitverwendung von Polybutadiendiol sowie dem inneren Weichmacher 2-Octyldodecanol und aromatischen Diisocyanaten relativ kurzkettig vernetzte Kunststoffmassen erhalten werden, die als Bröselmassen von Hand zerlegt werden können.

Aus der deutschen Offenlegungsschrift DE-OS 25 30 676 ist ein Verfahren zur Herstellung von Polyurethanmassen bekannt, die beispielsweise für elektrische Anwendungszwecke eingesetzt werden können. In diesem Verfahren werden als Polyolkomponente Polyesterpolyole, Polyetherpolyole sowie ein Polyhydroxypolymerisat eines 1,3-Dienkohlenwasserstoffes mit 4 bis 12 Kohlenstoffatomen in Mengen von 5 bis 40 Gew.-% - bezogen auf das Gesamtgewicht der Reaktionsteilnehmer - eingesetzt. Als geeignete Polyesterpolyole auf Basis von nachwachsenden Rohstoffen werden jedoch nur die Diglyceride von Hydroxylgruppen enthaltendem Rizinusöl, Tallöl, Sojaöl, Leinsamenöl etc. genannt.

Im Rahmen der Erfindung können die Polyesterpolyole enthaltende Reaktionsmischungen allein oder in Abmischung mit Polybutadiendiol als Polyolkomponente eingesetzt werden, wobei Polybutadiendiol auch den überwiegenden Anteil ausmachen kann. Vorzugsweise kann Polybutadiendiol in Gewichtsmengen von 20 bis 80 Gew.-% und insbesondere von 40 bis 60 Gew.-% zugesetzt werden. Die Mengen des zugesetzten Polybutadiendiols richtet sich hauptsächlich nach den gewünschten Eigenschaften des Polyurethangießharzes. Auf der einen Seite verbessern Zusätze an Polybutadiendiolen die elastischen Eigenschaften (gemessen als Shore-Härte A bei 27 °C) der Polyurethanmassen. Auf der anderen Seite ist das zudem noch teure Polybutadiendiol hochviskos (ca. 9000 mPa·s nach Höppler bei 25°C), so daß im Sinne einer guten Verarbeitung der Gehalt an Polybutadiendiol so niedrig wie möglich sein sollte.

Erfindungsgemäß wird Polybutadiendiol mit endständigen Hydroxylgruppen und mit einem mittleren Molekulargewicht von etwa 3 000 und einem Polymerisationsgrad im Bereich von 50 mitverwendet. Die endständigen, primären Hydroxylgruppen sind hauptsächlich allylisch angeordnet. Die vorherrschende Konfiguration des bevorzugten Polybutadiendiols ist ein trans-1,4-Isomer, das im Gemisch mit den anderen Cis-1,4- und Vinyl-1,2-Strukturen vorliegt. Die Funktionalität des mitverwendeten Polybutadiendiols liegt bevorzugt im Bereich von 2 bis 3, insbesondere im Bereich von 2,2 bis 2,6. Polybutadiendiol ist im Handel erhältlich und wird bspw. von der amerikanischen Firma Atlantic Richfield Company angeboten, die zur Produktinformation eine allgemeine Broschüre über Polybutadiendiol herausgegeben hat, in der Eigenschaften, Angaben zur Konfiguration und mögliche Reaktionen der Polybutadiendiole aufgeführt sind.

Im Rahmen der Erfindung hat sich als besonderer Vorteil herausgestellt, daß die beschriebenen Polyesterpolyole enthaltenden Reaktionsmischungen in jedem Mischungsverhältnis mit den Polybutadiendiolen mischbar sind. So kann beispielsweise die Viskosität der Polyolkomponente sehr gut über das Mischungungsverhältnis zwischen den Polyesterpolyolen enthaltenden Reaktionsgemisch mit dem Polybutadiendiol bestimmt werden. Da das erfindungsgemäß mitverwendete Polybutadiendiol an sich etwa eine Viskosität von 9 000 mPa·s aufweist, können durch gezielte Zugabemengen der Polyesterpolyole enthaltenen Reaktionsmischungen mit bestimmten Viskositäten, die je nach epoxidierten Estern und ringöffnenden Carbonsäuren schwanken, Polyolkomponenten mit gewünschten Viskositätswerten erhalten werden.

Erfindungsgemäß werden die Polyesterpolyole enthaltenden Reaktionsmischungen entweder alleine bzw. gegebenenfalls in Abmischung mit Polybutadiendiolen bei der Umsetzung mit Diisocyanaten zu Polyurethangießsystemen verwendet. Dazu wird die Polyesterpolyolkomponente bzw. die Polyesterpolyolkomponenten-Mischung in an sich bekannter Weise mit den Isocyanatkomponenten vermischt.

Im Rahmen der Erfindung werden die Polyolkomponente/n in solchen Mengen verwendet, daß das Verhältnis Härter-OH-Gruppen : Isocyanatgruppen im Bereich von 1 : 0,9 bis 1 : 1,3, bevorzugt im Bereich von 1 : 1 bis 1 : 1,2 liegt. Als Isocyanate lassen sich alle mindestens zwei endständige Isocyanatgruppen enthaltenden Verbindungen einsetzen, die üblicherweise zur Herstellung von Polyurethanpolymeren herangezogen werden. Als Isocyanatkomponenten sind alle aromatischen und aliphatischen Diisocyanate geeignet, wie z.B. 1,5-Naphthylendiisocyanat, 4,4'-Diphenyldimethylmethandiisocyanat, Di- und Tetraalkyl-diphenylmethandiisocyanat, die Isomeren des Toluylendiisocynats, gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, chlorierte und bromierte Diisocyanate, phosphorhaltige Diisocyanate, Butan-1,4-diisocyanat, Dicyclohexylmethandiisocyanat, Cyclohexan-1,4-Diisocyanat, Dimerfettsäurediisocyanat, Tetramethylcyclohexyldiisocyanat, Isophorondiisocyanat und Isomere.

Im Rahmen der Erfindung werden insbesondere aromatische Isocyanate mit 2 bis 4 Isocyanatgruppen eingesetzt. Geeignet sind sowohl solche Verbindungen, die alle Isocyanatgruppen an einem aromatischen Ring oder mehreren miteinander in Konjugation stehenden aromatischen Ringen enthalten, wie auch solche Verbindungen, die die Isocyanatgruppen an mehreren über Alkylengruppen, beispielsweise Methylengruppen, miteinander verbundenen Ringen enthalten. Geeignet sind beispielsweise 2,4-Toluylendiisocyanat und 4,4'-Diphenylmethandiisocyanat ("MDI-Polymer"). In weiteren Ausführungsformen werden als Isocyanatkomponente Mischungen von 4,4'-Diphenylmethandiisocyanat mit höherfunktionellen Isocyanaten, beispielsweise mit substituierten Diphenylmethandiisocyanaten eingesetzt, welche als Substituenten einen weiteren, Isocyanatgruppen tragenden aromatischen Ring aufweisen. Besonders bevorzugt sind handelsübliche flüssige Rohmischungen von Diphenylmethandiisocyanat ("MDI-Polymer"), die noch oligomere Polyphenylenpolymethylenpolyisocyanat enthalten. Unter diesen flüssigen Rohmischungen werden bevorzugt solche eingesetzt, die eine mittlere Funktionalität von 2 bis 2,5 Isocyanatgruppen pro Molekül aufweisen.

In einer besonderen Ausführungsform der vorliegenden Erfindung werden die Polyolkomponente/n im sogenannten one-shot-Verfahren verwendet, das heißt die Ausgangsstoffe werden direkt miteinander vermischt, im allgemeinen unter gleichzeitigem Zusatz von Hilfssubstanzen wie Treibmitteln, Katalysatoren, Schaumstabilisatoren und Flammschutzmitteln. Als Katalysatoren können alle die dem Fachmann bekannten bei der Polyurethanherstellung eingesetzt werden. Insbesondere sind tertiäre Amine unterschiedlichster Struktur wie Diaza-bicyclo-octan (Dabco), Triethylamin und Dimethylbenzylamin geeignet. Als Additive können ebenfalls die üblichen, bei der Herstellung von Polyurethanwerkstoffen bekannten, zugesetzt werden. Als derartige Additive sind beispielsweise Füllstoffe, Pigmente und/oder sogenannte Trockenmittel zu nennen. Im Rahmen der Erfindung werden als Trockenmittel die dem Fachmann bekannten Zeolithpasten bevorzugt zugesetzt.

Die durch die erfindungsgemäße Verwendung der Polyesterpolyole enthaltenden Reaktionsmischungen, gegebenenfalls in Abmischung mit Polybutadiendiolen, erhaltenen Polyurethanharzmischungen sind flüssig und verhältnismäßig niedrigviskos. Sie können leicht in Form gegossen werden und können ggf. bei leicht erhöhten Temperaturen zur Aushärtung gebracht werden.

Durch das erfindungsgemäße Verwenden der Polyesterpolyole enthaltenden Reaktionsmischung können massive Polyurethanwerkstoffe erhalten werden, die hinsichtlich Härte, Festigkeit und Formbeständigkeit sowie elektronischen Durchgangswiderständen hervorragend sind. Daher sind diese Polyurethanwerkstoffe insbesondere für Anwendungsbereiche des Elektroisoliersektors besonders geeignet. Zudem sind die neuen Polyurethanwerkstoffe aus Ausgangsstoffen erhalten worden, die aus nativen Quellen stammen und aus diesen in kostengünstigen Verfahren leicht und in hohen Ausbeuten erhältlich sind. Durch Variation der Polyesterpolyole enthaltenen Reaktionsmischungen mit Polybutadiendiolen sowie den Diisocyanaten können Polyurethanwerkstoffe mit einer großen Bandbreite von Eigenschaften erhalten werden.

### Beispiele

### A. Herstellung der Polyesterpolyole enthaltenden Reaktionsmischung

### Beispiel 1

1225 g Vorlauffettsäure (60 % C₈, 35 % C₁₀, SZ = 361,9), die bezogen auf Säurezahl 7,9 mol entsprechen, wurden im Reaktionsgefäß vorgelegt und unter Rühren auf 150 °C erwärmt. Unter Rühren wurden 1170 g Sojaölepoxid (Epoxidsauerstoffgehalt 6,78 Gew.-%) entsprechend 7,5 mol bezogen auf Epoxidgehalt, so zeitverzögert zudosiert (60 Minuten), daß der absolute Gehalt an nicht abreagierten Epoxidgruppen im Reaktionsgemisch nicht 1,6 Gew.-% überstieg. Nach erfolgter Zudosierung wurde die Reaktionstemperatur langsam auf 170 °C erhöht und das Reaktionsgemisch solange (2 Stunden) bei dieser Temperatur gehalten, bis der Restepoxidsauerstoffgehalt unter 0,15 Gew.-% sank. Die umgesetzte Vorlauffettsäure (470 g) wurde im Vakuum (kleiner 10 Pas) bis 200 °C abdestilliert.

Man erhielt eine Polyesterpolyole enthaltende Reaktionsmischung als klare, gelbe Flüssigkeit mit folgenden Kennzahlen:
OHZ = ca. 95; VZ = 235; SZ = 1,5; JZ = ca. 3,5,
H₂O < 0,1 Gew.-%; Viskosität nach Höppler bei 25 °C ca. 4 000 mPa·s.

### Beispiel 2

50 Gewichtsteile der nach Beispiel 1 hergestellten Polyesterpolyole enthaltenden Reaktionsmischung wurden mit 50 Gewichtsteilen des Polybutadiendiols des Herstellers Atochem Deutschland GmbH mit der Bezeichnung R-45 HT (Kennzahlen sind unter Vergleichsbeispiel 2 aufgeführt) innig verrührt.

Die erhaltene Mischung wies bei 27 °C eine Viskosität nach Höppler von 4 200 mPa·s auf.

### Vergleichsbeispiel 1

Als Polyolkomponente wurde ein handelsübliches Rizinusöl mit folgenden Kennzahlen eingesetzt:
OHZ = 161; VZ = ca. 180; JZ = 86; H₂O < 0,1 Gew.-%;
Viskosität nach Höppler bei 25 °C ca. 700 mPa·s.

### Vergleichsbeispiel 2

Als Polyolkomponente wurde handelsübliches Polybutadiendiol des Herstellers Atochem Deutschland GmbH mit der Bezeichnung R-45 HT mit folgenden Kennzahlen verwendet:
OHZ = 46,6; JZ = ca. 400; Molekulargewicht ca 2 800;
Viskosität nach Höppler bei 25 °C ca. 9 000 mPa·s; H₂O < 0,1 Gew.-%.

### Beispiel 3

In einer üblichen Mischapparatur wurden die in den Beispielen 1 und 2 sowie in den Vergleichsbeispielen 1 und 2 beschriebenen Polyolkomponenten in den aus Tabelle 1 ersichtlichen Mengen (in Gewichtsteilen) mit den ebenfalls aus Tabelle 1 ersichtlichen Mengen an Diphenylmethandiisocyanat-Mischung (MDI-Polymer), die 30 bis 33 Gew.-% an NCO enthielten, vermischt und als Additiv ein Trockenmittel (Zeolithpaste) in den aus Tabelle 1 ersichtlichen Mengen (Gewichtsteile) zugegeben. Bei Herstellung dieser Gießharz-Zusammensetzung wurde kein Katalysator verwendet.
Die Eigenschaften der erhaltenen Gießharzsysteme sind ebenfalls in Tabelle 1 zusammengefaßt.

**Tabelle 1**

| | Bsp. 1 | Bsp. 2 | Vgl.Bsp. 1 | Vgl.Bsp. 2 |
|---|---|---|---|---|
| Gew.-% an Polyolkomponente | 100 | 100 | 100 | 100 |
| Viskosität nach Höppler bei 27 °C in mPa·s | 3100 | 4200 | 650 | 8100 |
| Gew.-% Isocyanat MDI-Polymer 30 - 33 Gew.-% NCO | 25 | 18 | 40 | 11 |
| Trockenmittel Zeolithpaste Gew.-% | 5 | 5 | 5 | 5 |
| Topfzeit | > 3 h | ca. | ca. | ca. |
| | | 50 min | 25 min | 40 min |
| Eigenschaften der Gießharzmasse nach Reaktion | | | | |

| Shore Härte A (27 °C) nach | | | | |
|---|---|---|---|---|
| 24 h | - | 26 | 57 | - |
| 48 h | 35 | 31 | 63 | - |
| 72 h | 42 | 35 | 66 | - |
| 168 h | 50 | 40 | 68 | - |
| spezifischer Durchgangswiderstand nach 168 h Ohm · cm | 2·10¹⁵ | 6·10¹⁵ | 3·10¹⁴ | 4·10¹⁶ |

### Beispiel 4

In einer üblichen Mischapparatur wurden die in den Beispielen 1 und 2 sowie die in den Vergleichsbeispielen 1 und 2 beschriebenen Polyolkomponenten in den aus Tabelle 2 ersichtlichen Mengen (in Gewichtsteilen) mit den ebenfalls aus Tabelle 2 ersichtlichen Mengen an Diphenylmethandiisocyanat-Mischung (MDI-Polymer), die 30 bis 33 Gew.-% NCO enthielten, vermischt und als Additiv ein Trockenmittel (Zeolithpaste) in den aus Tabelle 2 ersichtlichen Mengen (Gewichtsteile) zugegeben. Im Gegensatz zu Beispiel 3 wurden die aus Tabelle 2 ersichtlichen Mengen an Diaza-bicyclo-octan als Katalysator bei der Zusammenmischung der Komponenten zugesetzt. Die Eigenschaften der erhaltenen Gießharzsysteme sind ebenfalls in Tabelle 2 zusammengefaßt.

**Tabelle 2**

| | Bsp. 1 | Bsp. 2 | Vgl.Bsp. 1 | Vgl.Bsp. 2 |
|---|---|---|---|---|
| Gew.-% an Polyolkomponente | 100 | 100 | 100 | 100 |
| Viskosität nach Höppler bei 27 °C in mPa·s | 3100 | 4200 | 650 | 8100 |
| Gew.-% Isocyanat MDI-Polymer 30 - 33 Gew.-% NCO | 25 | 18 | 40 | 11 |
| Trockenmittel Zeolithpaste Gew.-% | 5 | 5 | 5 | 5 |
| Katalysator (Dabco) in Gew.-% | 0,5 | 0,5 | 0,5 | 0,5 |
| Topfzeit | 10 min | 7 min | 9 min | 5 min |
| Eigenschaften der Gießharzmasse nach Reaktion | | | | |

| Shore Härte A (27 °C) nach | | | | |
|---|---|---|---|---|
| 24 h | 56 | 47 | 60 | 27 |
| 48 h | 58 | 48 | 64 | 30 |
| 72 h | 61 | 49 | 66 | 32 |
| 168 h | 61 | 51 | 68 | 33 |
| spezifischer Durchgangswiderstand nach 168 h Ohm · cm | 4,5·10¹⁵ | 1,6·10¹⁵ | 1,3#CDT#10¹⁴ | 4·10¹⁶ |
| Reißfestigkeit MPa | 1,4 | 0,6 | 1,4 | 0,18 |
| Dehnung % | 38,8 | 38,8 | 30,6 | 79,5 |

## Patentansprüche

1. Verwendung von bei Raumtemperatur gießfähigen Polyesterpolyole enthaltenden Reaktionsmischungen, die durch ringöffnende Umsetzung von Estern aus epoxidierten Säuren und/oder Alkoholen mit Mono-Carbonsäuren bis zu einem Restepoxidsauerstoffgehalt im Reaktionsgemisch unter 1,0 Gew.-% hergestellt worden sind und die im statistischen Mittel pro Molekül mehr als eine Hydroxylgruppe aufweisen, als Polyolkomponente für die Herstellung von Polyurethan-Werkstoffen nach dem Gießverfahren.

2. Verwendung nach Anspruch 1, dadurch gekennzeichnet, daß die Polyesterpolyole enthaltenden Reaktionsmischungen im statistischen Mittel pro Molekül mehr als 1,5 freie Hydroxylgruppen aufweisen und vorzugsweise überwiegend in Nachbarstellung zu den freien Hydroxylgruppen Estergruppen der ringöffnenden Carbonsäure enthalten.

3. Verwendung nach einem der Ansprüche 1 bis 2, dadurch gekennzeichnet, daß die bei Raumtemperatur gießfähigen Polyesterpolyole enthaltenden Reaktionsmischungen Viskositäten unter 9000 mPa·s, vorzugsweise unter 6 000 mPa·s und bevorzugt Viskositäten in dem Bereich von 50 bis 5 000 mPa·s aufweisen.

4. Verwendung nach einem der Ansprüche 1 bis 3, dadurch gekennzeichnet, daß Polyesterpolyole enthaltende Reaktionsmischungen verwendet werden, die durch zeitverzögertes Eindosieren der epoxidierten Ester zu vorgelegten Mono-Carbonsäuren hergestellt worden sind.

5. Verwendung nach einem der Ansprüche 1 bis 4, dadurch gekennzeichnet, daß Polyesterpolyole enthaltende Reaktionsmischungen verwendet werden, die durch ringöffenende Umsetzung von epoxidierten Estern, die mehr als eine Epoxidgruppe, insbesondere 2 und mehr Epoxidgruppen im Molekül aufweisen, hergestellt worden sind.

6. Verwendung nach einem der Ansprüche 1 bis 5, dadurch gekennzeichnet, daß Polyesterpolyole enthaltende Reaktionsmischungen verwendet werden, die durch Ringöffnung von epoxidierten Triglyceriden hergestellt worden sind, wobei die Epoxidgruppen vorzugsweise im Säurerest des Esters vorliegen.

7. Verwendung nach einem der Ansprüche 1 bis 6, dadurch gekennzeichnet, daß Polyesterpolyole enthaltende Reaktionsmischungen verwendet werden, die durch Ringöffnung von epoxidierten Estern mit gesättigten und/oder ungesättigten Monocarbonsäuren mit bis zu 40 C-Atomen, bevorzugt mit bis zu 36 C-Atomen hergestellt worden sind.

8. Verwendung nach einem der Ansprüche 1 bis 7, dadurch gekennzeichnet, daß die Polyesterpolyole enthaltenden Reaktionsmischungen in Abmischung mit Polybutadiendiolen als Polyolkomponente verwendet werden, wobei die Polybutadiendiole auch den überwiegenden Anteil der Polyolkomponente ausmachen können und endständige Hydroxylgruppen, ein Molekulargewicht von etwa 3 000 und einen Polymerisationsgrad im Bereich von 50 aufweisen.

9. Verwendung nach einem der Ansprüche 1 bis 8, dadurch gekennzeichnet, daß Polyesterpolyole enthaltende Reaktionsmischungen bei der Herstellung von Polyurethanwerkstoffen unter Mitverwendung von mindestens 2 Isocyanatgruppen pro Molekül enthaltenden Isocyanaten in Anwesenheit eines Polymerisationskatalysators verwendet werden.

10. Verwendung nach einem der Ansprüche 1 bis 9, dadurch gekennzeichnet, daß die Polyesterpolyole enthaltenden Reaktionsmischungen in solchen Mengen verwendet werden, daß das Verhältnis von OH-Gruppen : Isocyanatgruppen im Bereich von 1 : 0,9 bis 1 : 1,3 liegt.

11. Verfahren zur Herstellung von Polyurethanwerkstoffen nach dem Gießverfahren durch Umsetzung von mindestens 2 Isocyanatgruppen enthaltenden Verbindungen mit Polyesterpolyole enthaltenden Reaktionsmischungen, die durch Ringöffnung von Estern aus epoxidierten Säuren und/oder Alkoholen mit Mono-Carbonsäuren bis zu einem Restepoxidsauerstoffgehalt im Reaktionsgemisch unter 1,0 Gew.-% hergestellt worden sind und die im statistischen Mittel pro Molekül mehr als eine freie Hydroxylgruppe aufweisen, dadurch gekennzeichnet, daß Polyesterpolyole enthaltende Reaktionsmischungen eingesetzt werden, die durch zeitverzögertes Eindosieren von epoxidierten Triglyceriden zu vorgelegter Carbonsäure hergestellt worden sind.

## Claims

1. The use of reaction mixtures containing polyester polyols which can be cast at room temperature, which have been obtained by ring opening of esters of epoxidized acids and/or alcohols with monocarboxylic acids to a residual epoxide oxygen content in the reaction mixture below 1.0% by weight and which, on a statistical average, contain more than one hydroxyl group per molecule as polyol component in the production of polyurethane materials by casting.

2. The use claimed in claim 1, characterized in that the reaction mixtures containing polyester polyols contain on a statistical average more than 1.5 free hydroxyl groups per molecule and - preferably predominantly adjacent the free hydroxyl groups - ester groups of the ring-opening carboxylic acid.

3. The use claimed in claim 1 or 2, characterized in that the reaction mixtures containing polyester polyols which can be cast at room temperature have viscosities below 9,000 mPa·s, preferably below 6,000 mPa·s and more preferably in the range from 50 to 5,000 mPa·s.

4. The use claimed in any of claims 1 to 3, characterized in that reaction mixtures containing polyester polyols which have been prepared by delayed addition of the epoxidized esters to monocarboxylic acids introduced beforehand are used.

5. The use claimed in any of claims 1 to 4, characterized in that reaction mixtures containing polyester polyols which have been produced by ring-opening reaction of epoxidized esters containing more than one epoxide group and, more particularly, two or more epoxide groups per molecule are used.

6. The use claimed in any of claims 1 to 5, characterized in that reaction mixtures containing polyester polyols which have been produced by ring opening of epoxidized triglycerides are used, the epoxide groups preferably being present in the acid component of the ester.

7. The use claimed in any of claims 1 to 6, characterized in that reaction mixtures containing polyester polyols which have been obtained by ring opening of epoxidized esters with saturated and/or unsaturated monocarboxylic acids containing up to 40 carbon atoms and preferably up to 36 carbon atoms are used.

8. The use claimed in any of claims 1 to 7, characterized in that the reaction mixtures containing polyester polyols are used in admixture with polybutadiene diols as the polyol component; the polybutadiene diols may even be the predominant part of the polyol component and contain terminal hydroxyl groups and have a molecular weight of around 3,000 and a degree of polymerization of the order of 50.

9. The use claimed in any of claims 1 to 8, characterized in that reaction mixtures containing polyester polyols are used in the production of polyurethane materials using isocyanates containing at least two isocyanate groups per molecule in the presence of a polymerization catalyst.

10. The use claimed in any of claims 1 to 9, characterized in that the reaction mixtures containing polyester polyols are used in such quantities that the ratio of OH groups to isocyanate groups is in the range from 1:0.9 to 1:1.3.

11. A process for the production of polyurethane materials by casting by reaction of compounds containing at least two isocyanate groups with reaction mixtures containing polyester polyols which have been obtained by ring opening of esters of epoxidized acids and/or alcohols with monocarboxylic acids to a residual epoxide oxygen content in the reaction mixture below 1.0% by weight and which, on a statistical average, contain more than one free hydroxyl group per molecule characterized in that the reaction mixtures containing polyester polyols used have been obtained by delayed addition of epoxidized triglycerides to carboxylic acid introduced beforehand.

## Revendications

1. Utilisation de polyols aptes à être coulés à température ordinaire, contenant des polyesterpolyols, qui ont été produits par transformation avec ouverture du cycle d'esters d'acides et/ou d'alcools époxydés avec des monoacides carboxyliques jusqu'à une teneur résiduelle en oxygène époxydé dans le mélange réactionnel inférieur à 1,0 % en poids et qui comportent en moyenne statistique par molécule plus d'un groupe hydroxyle, comme composent polyol pour la fabrication de matériaux polyuréthanne, selon le procédé de moulage;

2. Utilisation selon la revendication 1, caractérisée en ce que les mélanges réactionnels contenant des polyesterpolyols comprennent en moyenne statistique par molécule plus d'1,5 groupe hydroxyle libre et contiennent de préférence en prédominance en position voisine des groupes hydroxyle libres des groupes ester de l'acide carboxylique ouvrant le cycle.

3. Utilisation selon une des revendications 1 à 2, caractérisée en ce que les mélanges réactionnels aptes au moulage à température ambiante contenant des polyesterpolyols ont des viscosités inférieures à 9000 Pa.s, de préférence inférieures à 6000 Pa.s et de préférence des viscosités dans l'intervalle de 50 à 5000 Pa.s.

4. Utilisation selon une des revendications 1 à 3, caractérisée en ce qu'on utilise des mélanges réactionnels contenant des polyesterpolyols qui ont été produits par introduction dosée ralentie, dans le temps des esters époxydés par rapport aux acides mono-carboxyliques mis en place auparavant.

5. Utilisation selon une des revendications 1 à 4, caractérisée en ce qu'on utilise des mélanges réactionnels contenant des polyesterpolyols qui ont été fabriqués par transformation ouvrant le cycle d'esters époxydés, qui comprennent plus d'un groupe époxyde, en particulier 2 et plus de groupes époxydes dans la molécule;

6. Utilisation selon une des revendications 1 à 5, caractérisée en ce qu'on utilise des mélanges réactionnels contenant des polyesterpolyols, qui ont été produits par ouverture du cycle de triglycérides époxydés, les groupes époxyde étant présents de préférence dans le radical acide de l'ester.

7. Utilisation selon une des revendications 1 à 6, caractérisée en ce qu'on utilise des mélanges réactionnels contenant des polyesterpolyols, qui ont été préparés par ouverture du cycle d'esters époxydés avec des acides monocarboxyliques saturés et/ou non saturés ayant jusqu'à 40 atomes de C, de préférence jusqu'à 36 atomes de C.

8. Utilisation selon une des revendications 1 à 7, caractérisée en ce que les mélanges réactionnels contenant des polyesterpolyols sont utilisés en mélange avec des polybutadiendiols comie composant polyol, les polybutadiendiols pouvant constituer la partie prépondérante du composant polyol et des groupes hydroxyles terminaux comportant un poids moléculaire d'environ 3000 et un degré de polymérisation au niveau de 50.

9. Utilisation selon une des revendications 1 à 8, caractérisée en ce que des mélanges réactionnels contenant des polyesterpolyols sont utilisés pour la production de matériaux polyuréthannes en utilisant en même temps au moins des isocyanates contenant 2 groupes isocyanates par molécule en présence d'un catalyseur de polymérisation.

10. Utilisation selon une des revendications 1 à 9, caractérisée en ce que les mélanges réactionnels contenant des polyesterpolyols sont utilisés en des quantités telles que le rapport des groupe OH aux groupes isocyanate se situe dans la zone 1:0,9 à 1:1,3.

11. Procédé pour fabriquer des matériaux polyuréthannes selon le procédé de moulage par transformation de composés contenant au moins 2 groupes isocyanates avec des mélanges réactionnels contenant des polyesterpolyols, qui ont été produits pur ouverture du cycle d'esters d'acides et/ou d'alcools époxydés avec des acides monocarboxyliques jusqu'à une teneur résiduelle d'oxygène époxydé dans le mélange réactionnel inférieure à 1,0 % en poids et qui comportent en moyenne statistique par molécule plus d'un groupe hydroxyle libre, caractérisé en ce qu'on met en oeuvre des mélanges réactionnels contenant des polyesterpolyols, qui ont été produits par introduction dosée ralentie dans le temps de triglycérides époxydés par rapport à de l'acide carboxylique déposé auparavant.
